Europäisches Patentamt

European Patent Office

Office européen des brevets

(11) Publication number: **0 209 652**
A1

(12) ## EUROPEAN PATENT APPLICATION

(21) Application number: 86106145.5

(22) Date of filing: 29.12.83

(51) Int. Cl.⁴: **D 06 B 5/16**
B 65 H 67/06, D 01 H 9/00

(30) Priority: 30.12.82 IT 2504182
06.10.83 IT 2317783
06.10.83 IT 2317883
07.10.83 IT 2319683 U
07.10.83 IT 2319783 U
07.10.83 IT 2319883 U

(43) Date of publication of application:
28.01.87 Bulletin 87/5

(84) Designated Contracting States:
BE CH DE FR GB LI SE

⅞¼Publication number of the earlier application
in accordance with Art. 76 EPC: 0 113 126

(71) Applicant: OFFICINE MINNETTI di Federico Minnetti & C.
S.A.S.
Via Colonna 2
I-51018 Pieve a Nievole (Pistoia)(IT)

(72) Inventor: Raveggi, Ornella
Via Colonna, 2
I-51018 Pieve a Nievole (Pistoia)(IT)

(72) Inventor: Minnetti, Federico
Via Colonna, 2
I-51018 Pieve a Nievole (Pistoia)(IT)

(74) Representative: Dr. Ing. A. Racheli & C.
Viale San Michele del Carso, 4
I-20144 Milano(IT)

(54) A process and system for automatic handling of yarn reels.

(57) In a reel handling process, particularly in connection with an equipment for the dyeing of such reels, orderly arranged reels are withdrawn and mechanically slipped onto the rods of dyeing baskets; after the dyeing the reels are mechanically drawn from the dyeing baskets and placed on a basket for centrifugation. A handling system comprises a loading and/or unloading apparatus (76) for loading and/or unloading the reels on rods of a dyeing basket (130) and for placing separating discs between the reels; and if it is the case an applying apparatus for clamping devices.

FIG. 1

0209652

86106145.5

Applicant:

OFFICINE MINNETTI DI FEDERICO MINNETTI & C. S.A.S.

Via Colonna, 2

IT - 58018 PIEVE A NIEVOLE (Pistoia)

## "A PROCESS AND SYSTEM FOR AUTOMATIC HANDLING OF YARN REELS"

This patent application relates to the art of handling yarns in cones, bobbins or reels (winding of yarn in frusto-conical or cylindrical shape, semi-rigid, on a rigid core also of frusto-conical or cylindrical shape), generally for the loading and unloading thereof into "baskets" for a dyeing treatment.

The baskets, normally used for reel yarn dyeing, have a base and a plurality of parallel rods co-extended from the base. According to the technique presently known, a worker by manual process takes the reels from a container where they lie in bulk, subjects them to a skirting or rounding operation (rounding off of the corners or edges by pressing the reels between two shaped plates or pans), slips the reels one by one on each rod of the basket interposing spacing discs therebetween so as to form on each rod a pile of equally oriented reels, that is generally, if it is the case of conical reels or cones, with the cone minor base placed above and the major base below, and then clamps each row with a clamping device. The baskets so prepared are introduced into a dyeing cabinet and processed. After processing, still by manual operation, the reels or cones are removed and loaded loose into an hydroextractor cage for subsequent centrifugation.

From the foregoing it is clear that the process and the plants now in use require substantial manual handling with the disadvantage of a high inherent cost; moreover it is hard and repetitive work. Therefore, there is in the art the need to mechanize and automate the above mentioned operations, providing lighter work conditions at a reduced cost.

Prior US Patent No. 3,358,940 (Beckwith) is known, describing an apparatus which continuously supplies bobbins to an automatic winging machine; the apparatus comprises a hopper from which the bobbins are evacuated and aligned through an inclined base plate and an upper guide plate, to a rotating vane drum which feeds them to a vertical conveyor.

From French Patent No. 2,228,018 (Officine Savio S.p.A.) a shuttle aligning device is also known comprising conveyor belts and a blade elevator belt.

Such apparatuses refer to fields somewhat different from the one dealt with in this application, they do not apply well to articles for example of frusto-conical shape, and only solve a problem of alignment of objects and not the more complex problem of complete handling.

It is an object of the present invention to carry out the handling of reel yarns (reels of conical or cylindrical shape), particularly in connection with the loading of reels in dyeing cabinets, by total mechanical operation, thus improving working conditions and reducing costs.

The above object has been achieved by a process for handling yarn reels, according to this patent application, particularly in connection with loading in a dyeing cabinet, comprising the following steps: transferring the reels into a basket; slipping the reels on the basket rods; arranging spacing discs between a reel and the next one, and where the seizing of each reel is done by engaging the inside of the reel core; the drawing of the reel for transfer into the basket takes place simultaneously to the placing of a spacing disc, and the laying down of the reel takes place simultaneously with the drawing or taking of the subsequent separating disc; the process further comprises the step of intermittently angularly rotating the basket through predetermined angles until a given numer of reels are on a rod of the basket.

A system or plant for the handling of articles, particularly reel is also an object of this invention; the system comprises a transfer apparatus and eventually an apparatus for applying and removing clamping devices, a rod centering apparatus, a platform

- 4 -

transferable and rotating for the dyeing basket.

The transfer apparatus comprises at least one gripping member or pliers formed of spreadable jaws, to engage from the inside, the core of a reel. The transfer apparatus comprises further a movable crosspiece carrying two said pliers spaced apart and movable transversally to the crosspiece movement.

The applying-removing apparatus for clamping devices comprises a pair of jaws, one of which is provided with a cam for the control of the clamping device.

A centering apparatus for the rods of the dyeing basket comprises, on a fixed structure, jaws or arms rotating around vertical pins, which arrange tightly around a rod of the basket at the loading and unloading step.

The dyeing basket, during the loading and unloading step, is preferably supported on a rotating and linearly movable platform.

According to favourite embodiments, a reel gripping member on the transfer apparatus comprises at least two jaws movable between a closed condition, where they do not engage the inner wall of the reel core, and an open condition, where they engage it, each jaw having an attachment tang for connection to an operating means and a gripping portion integral with said tang and also a stop or retainer means extended from said jaw; the gripping portion has a bulb shape and has teeth extended from the surface; the stop means can be a semicircular pan or plate on each jaw having an edge in relief towards the gripping end of the member, or it may be formed by a pair of inclined curved bands, each integral with one of two jaws.

5. A disc gripping member comprises a gripping portion, divided into a plurality of jaws (generally two) movable between an open condition, in which they engage an edge of the disc around the through hole thereof, and a closed condition, in which they do not engage the disc; said member comprises a gripping portion and the latter includes a stop or retainer ridge extended transversally to the longitudinal axis of the gripping portion and forming a stop; a circumferential groove; and a retaining tooth radially projecting and axially spaced apart from the ridge; the stop ridge is generally a circular crown pan or plate applied, generally by welding, to the body of the gripping member; the tooth has generally a circular shape as seen in plan view and has a diameter smaller than the diameter of the disc hole.

The applying of the clamping device has been hitherto carried out manually.

There is a need in the field, particularly in connection with the carrying out of mechanized systems for reel treatment, to mechanize the application and removal of the clamping devices on the rods.

An aim of this application is therefore to carry out the mechanical application of reel clamping devices on the rods.

An applying-removing apparatus for clamping devices comprises gripping means to seize or grip a clamping device and lifting means for lifting a control lever in the clamping device, said lifting means comprising an inclined surface cam movable between a position wherein said lever is allowed to lower by gravity and a position wherein said lever is lifted releasing the device.

In an embodiment of the system, where a stock of separating or spacing discs as supplied by a single magazine rod is considered insufficient, a magazine rod supplying (or unloading) apparatus is provided, comprising a continuous conveyor means having engagement elements for the feet of disc carrying rods, said engagement elements being longitudinally spaced apart on said means, it further comprises means for stepwise advancement of the conveyor means; the engagement means normally comprise guides or sleeves for receiving at least the edges of the rod feet and preferably in such a way that the ends of the rod feet project so to bear on flat guides fixed to the device on which they can slide; and preferably the device includes a side pusher at the conveyor end to eject the unloaded or the disc loaded rods.

The new process and relative system allow for the loading of reels onto a dyeing basket, and unloading therefrom in a completely mechanized manner without any labour but for supervision duties. They consequently allow for a considerable improvement in work conditions.

An embodiment of the system, at present preferred, will be described in the following and in connection with it the process will also be explained: the preferred embodiment is shown in the enclosed drawings where:

Fig. 1 is a schematic perspective view of a portion of the system relating to a basket loading unit for loading reels on the rods of a dyeing basket;

Fig. 2 is a schematic perspective view of a portion of the system relating to a basket unloading unit for unloading reels from the rods of a dyeing basket;

Fig. 3 is a front view of a pliers transfer apparatus;

Fig. 4 is a plan view of the pliers transfer apparatus of Fig. 3;

Fig. 5 shows a side view of a type of reel gripping member for use on the transfer apparatus of Figs. 3 and 4, shown in partial sectional view;

Fig. 6 is a top view of a jaw of the reel gripping member of fig. 5;

Fig. 7 is a part elevational, part sectional side view, through a slightly modified gripping member;

Fig. 8 is a half-drawn bottom view as regards to Fig. 7;

Fig. 9 is part elevational, part sectional side view of a disc gripping member;

Fig. 10 is a partial top view of Fig. 9;

Fig. 11 is a part elevational part sectional view of an apparatus for applying and removing clamping devices, the apparatus is shown at a lowered condition on a reel pile, slipped onto a rod, with a clamping device already positioned on the rod and clamped;

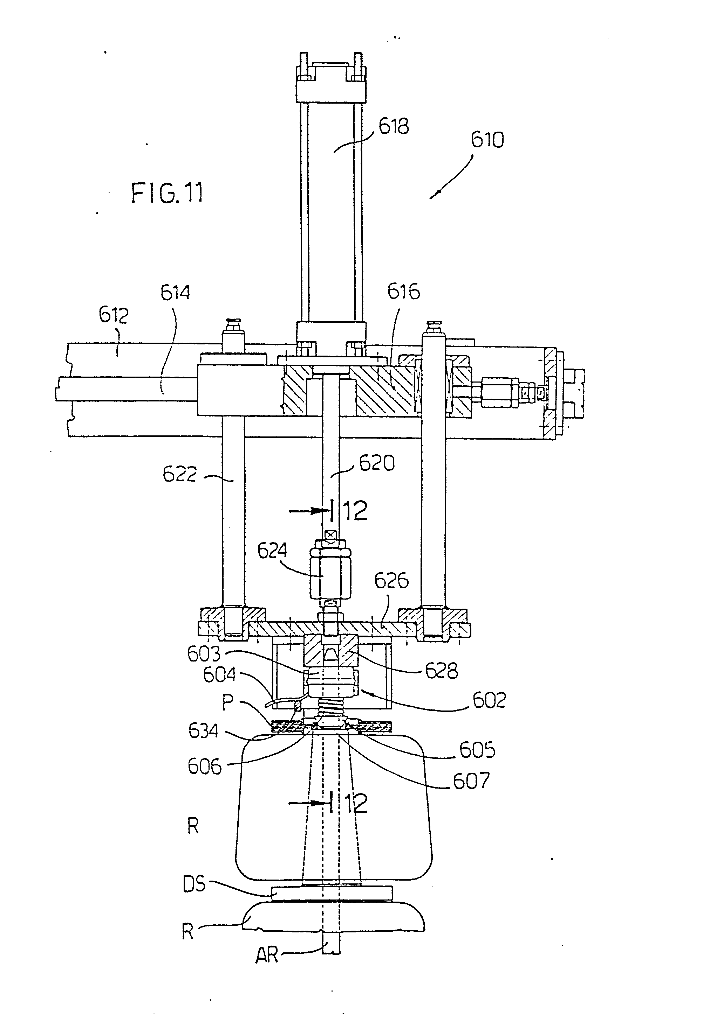

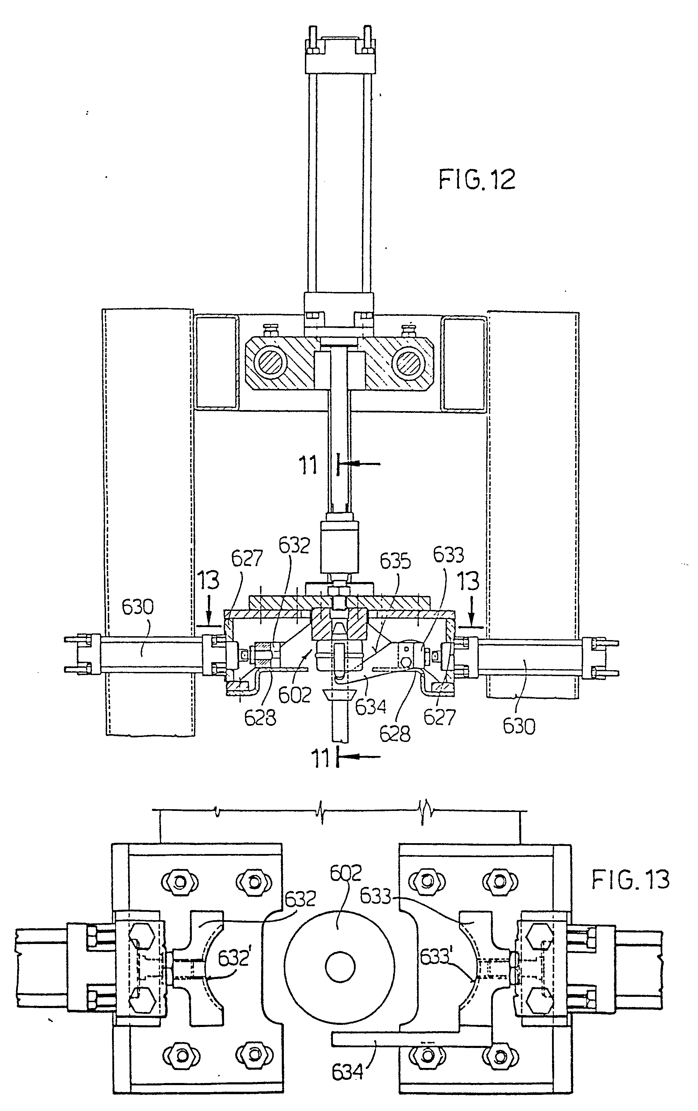

.Fig. 12 is a view of the apparatus, partly in side view orthogonal to Fig. 11 and partly in axial sectional view;

Fig. 13 is a sectional view taken along line 13-13 of Fig. 12;

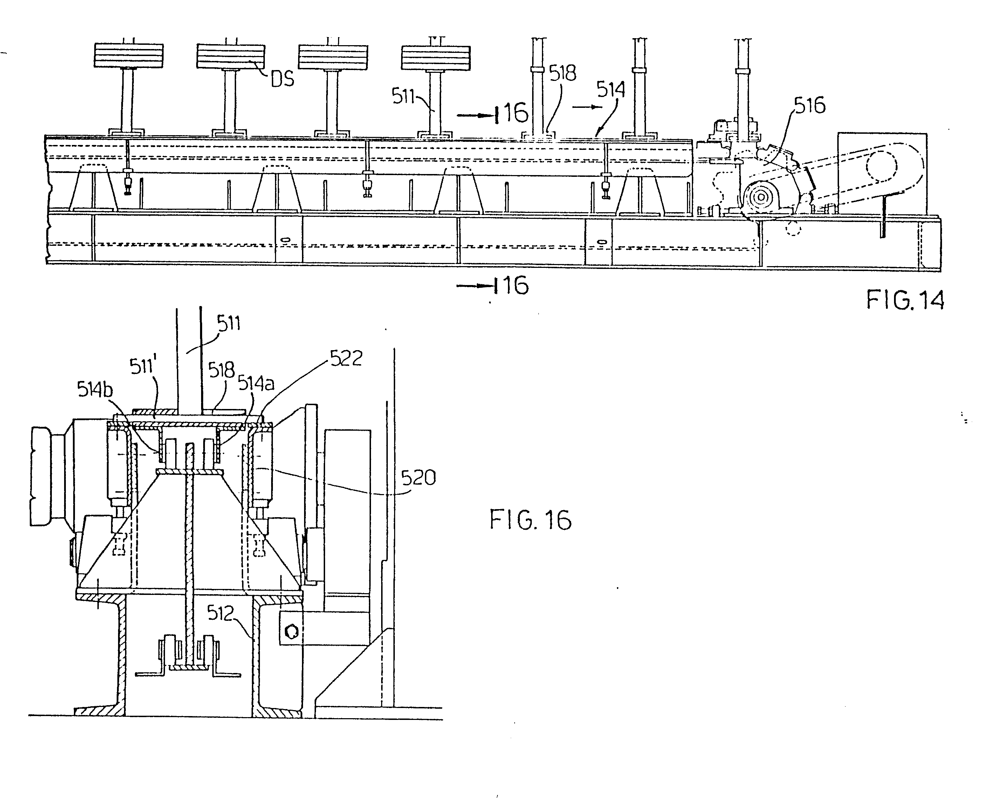

Fig. 14 is a side view of a device supplying disc-carrying rods, in a cut away view where the disc-carrying rods are also shown cut away;

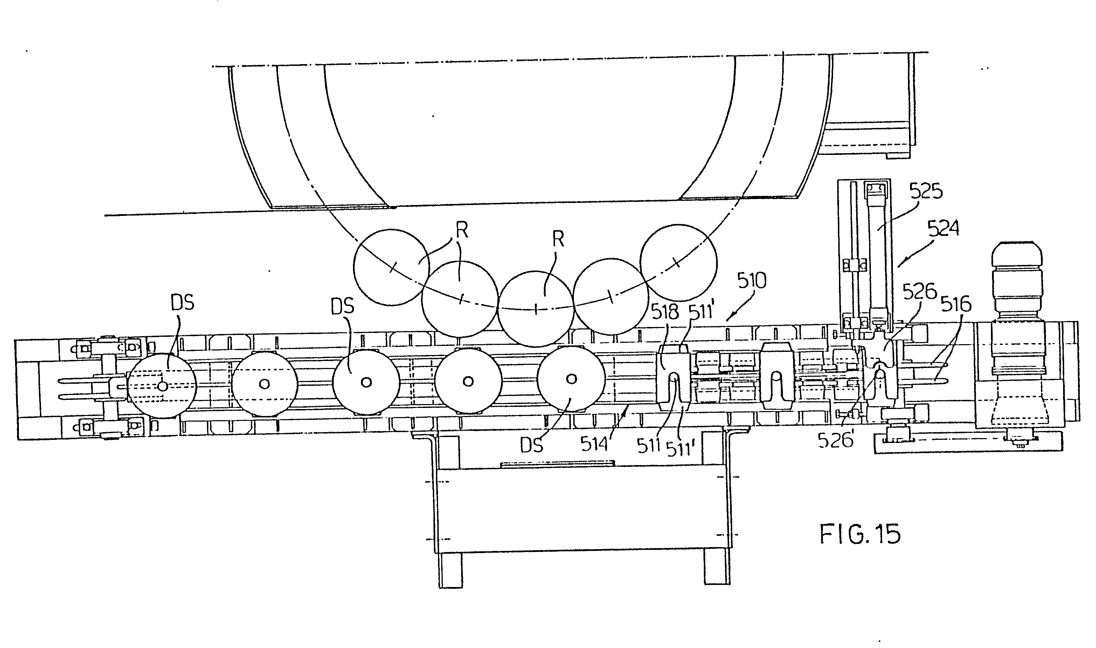

Fig. 15 is a plan view of the device of Fig. 14 shown next to a dyeing basket during the reel loading operation, highly schematized;

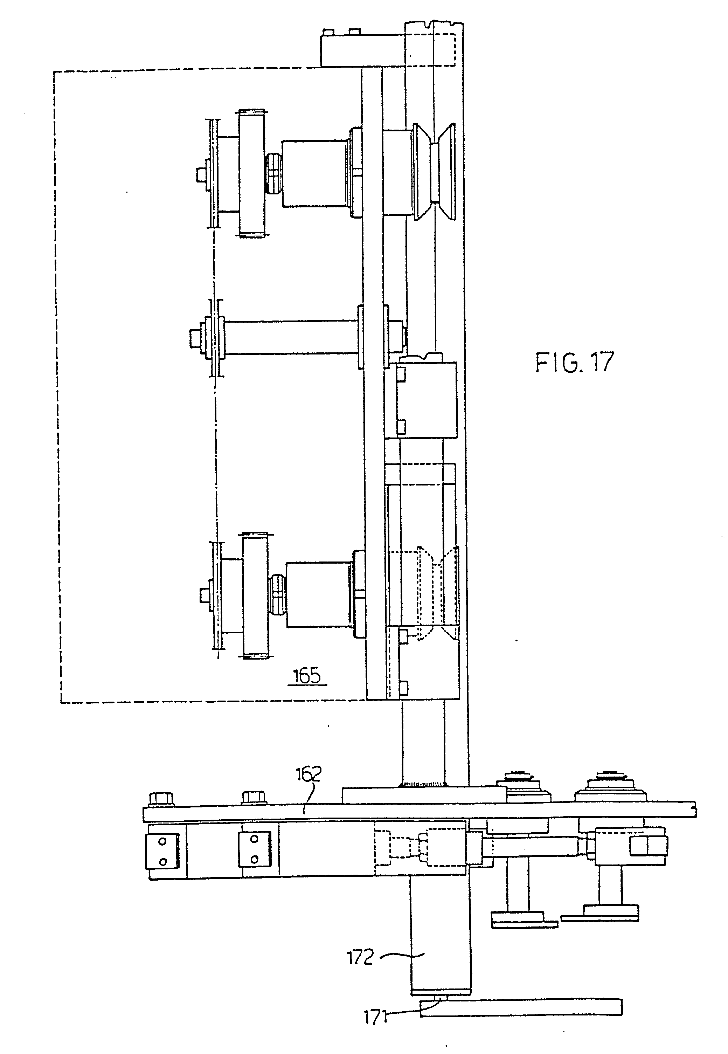

Fig. 16 is a sectional view taken along line 16-16 of Fig. 14;

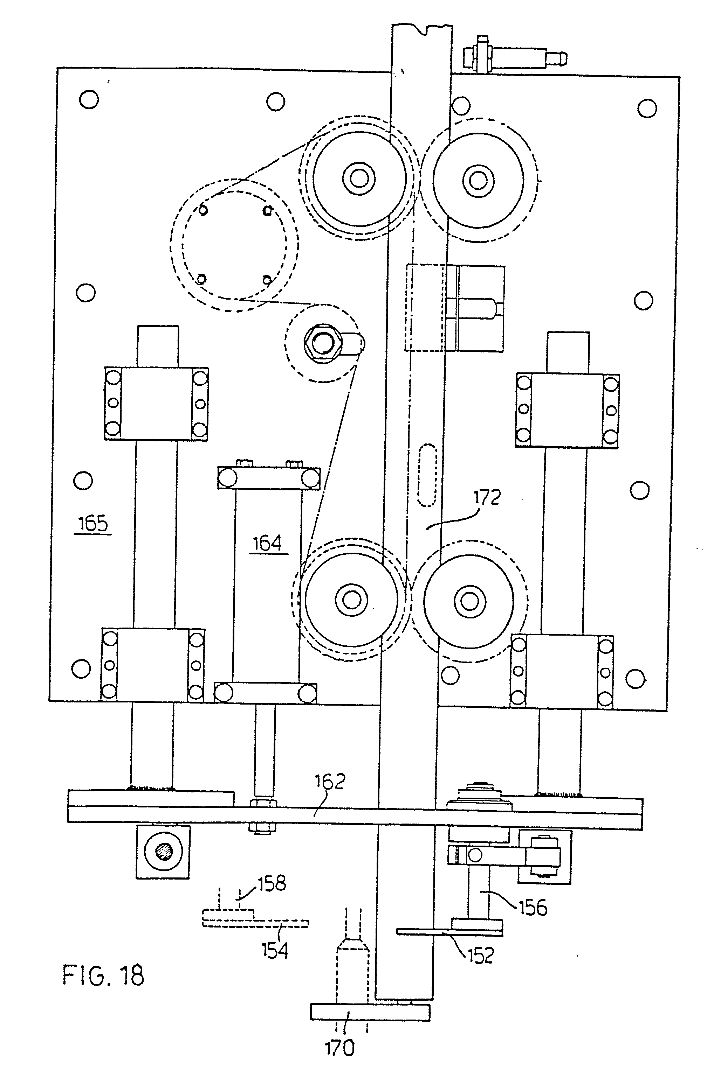

Figs. 17, 18, 19 and 20 are respectively two side views, a plan view and a detail of a centering-lifting apparatus.

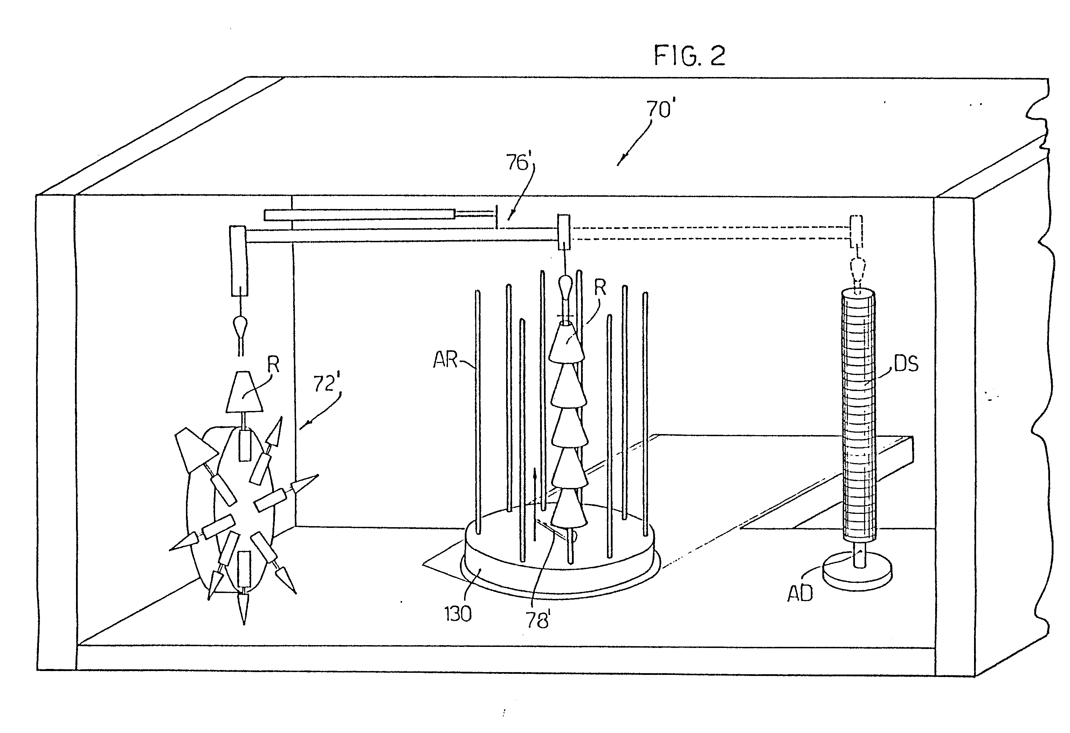

The system and process will be hereinafter described for use with yarn reels indicated with R. Although reels of frusto-conical shape on rigid frusto-conical cores are described, it is meant that with slight changes the system and process are adaptable to cylindrical reels. Downstream of an aligning-orientating unit 10, of any type and not explained in detail, and a handling apparatus 72, object of EP application n. 83113202.2, the handling system includes a basket loading unit 70 for loading the baskets of a dyeing cabinet and, if it is the case, a unit 70' (fig. 2) for unloading and loading the baskets of a centrifugal drum.

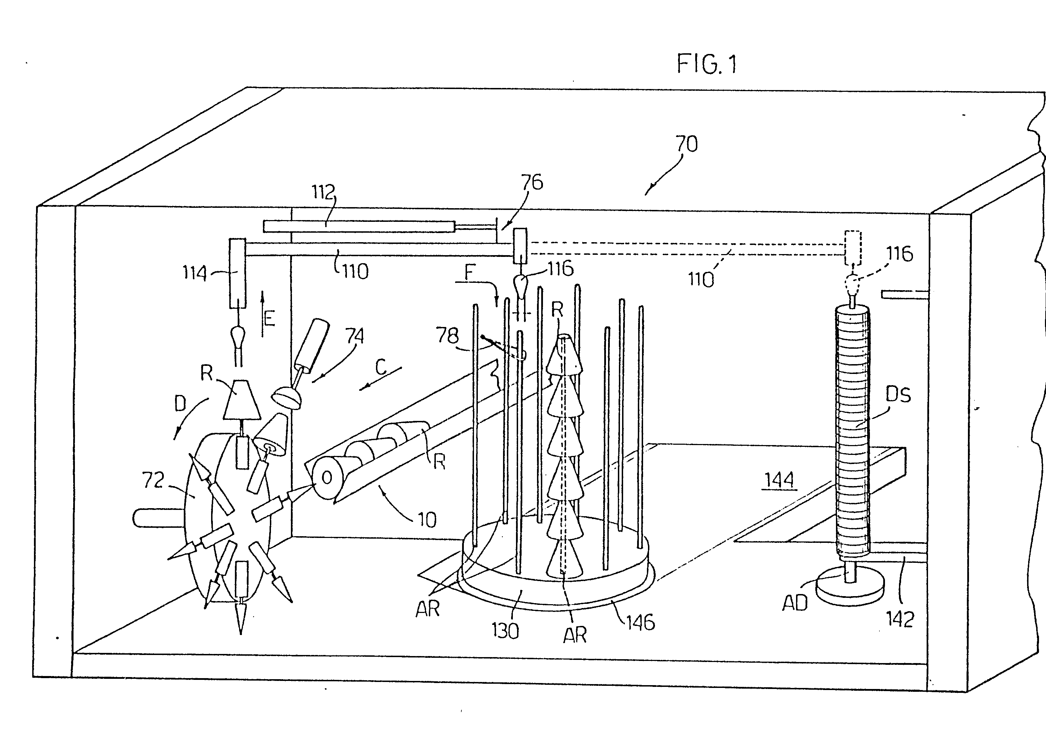

The basket loading unit, indicated at 70, is schematically shown in Fig. 1; it includes a transfer apparatus 76; a centering or centering-lifting device 78; an apparatus for applying reel- clamping devices.

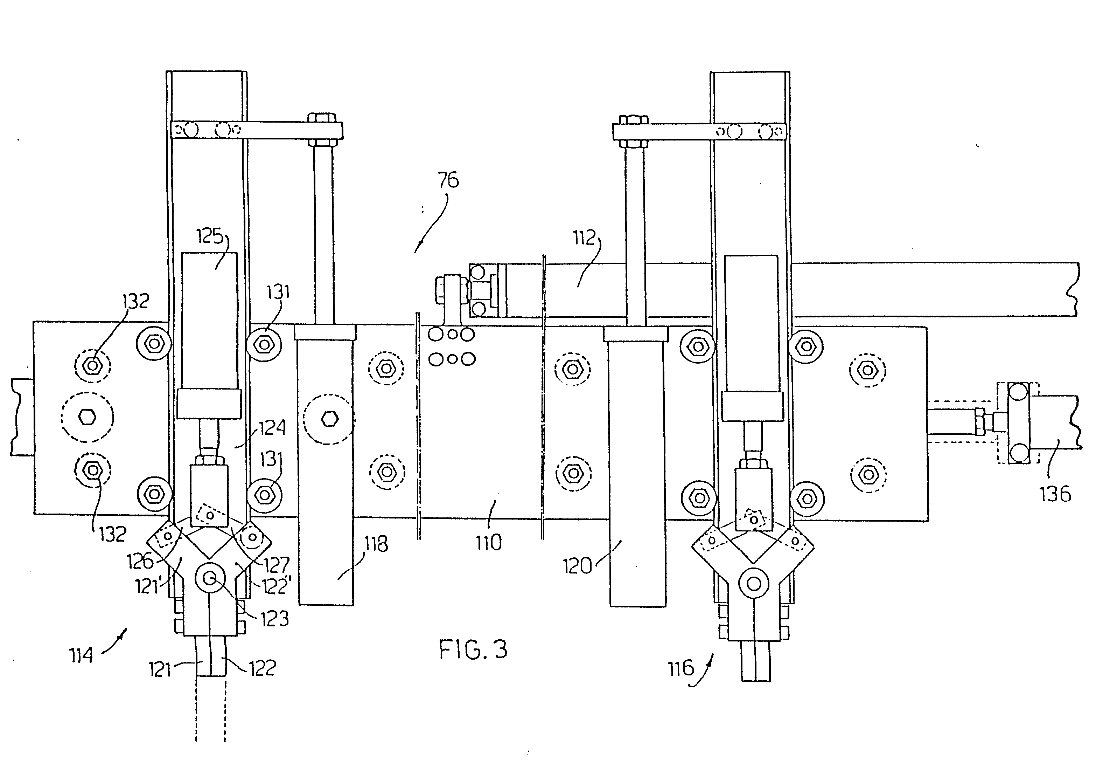

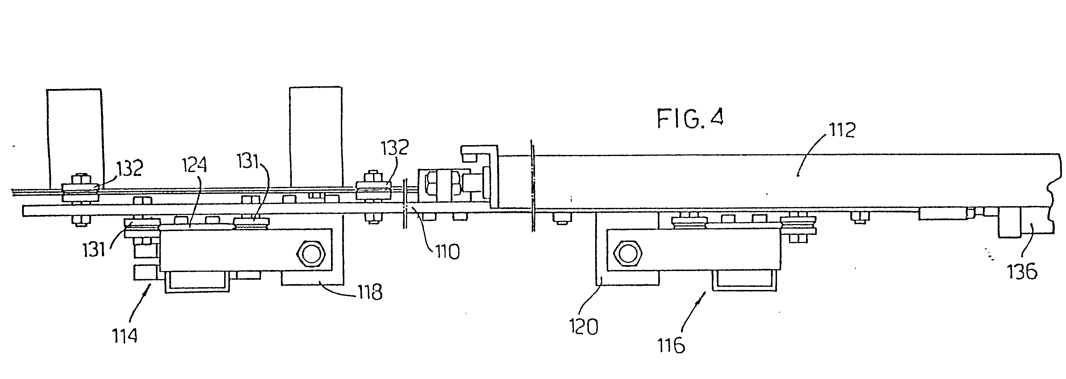

It will be now described, with reference to Figs. 3 and 4, the transfer apparatus 76 used to transfer reels and separating or spacing discs.

The transfer apparatus 76 comprises a crosspiece 110 shiftable on a fixed structure (not shown) along its longitudinal axis, generally horizontally, by the cylinder piston unit 112. Crosspiece 110 carries a first gripping member or pliers 114 for reels and a second gripping member or pliers 116 for discs, spaced apart from each other, vertically shiftable by cylinder-piston units, respectively 118 and 120. In an embodiment gripping member 114 only will be hereinafter described, since member 116 substantially similar. Member 114 comprises a pair of spreadable rods 121 and 122, pivoted to a pin 123 on a slider 124 and connected to an opening and closing cylinder-piston unit 125 (carried on the slider), by a pantograph system comprising angled extensions 121', 122' and rods and link rods 126, 127. The cross dimension of the rods is such that they can be slipped into the spaces left free between the rigid core of a reel R slipped onto a rod AR of a 'per sè' known dyeing basket 130; such known basket rods are of a substantially three-lobed shape in cross-section, while the reel core is circular in cross-section. The lefthand pliers rods 114 are preferably shorter to engage the hole portion in the reel core which is left free when the reel is on a gripping device of the wheel apparatus 72.

A vertical guide system for slider 124 provides splined rollers 131 for engagement with a corresponding profile on the slider. A similar guide system with rollers 132 is provided for a corresponding profile integral with the shiftable crosspiece 110.

A second horizontal piston 136 provides for shock dampening.

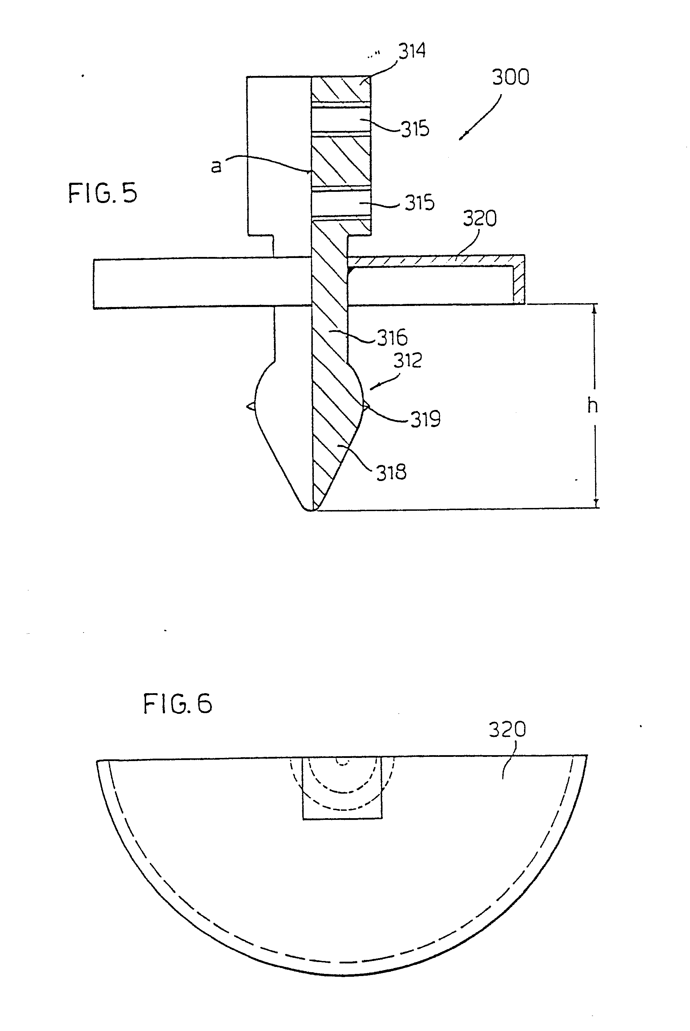

Fig. 5-8 and 9-10, respectively, show variations to the gripping members or pliers 114 and 116.

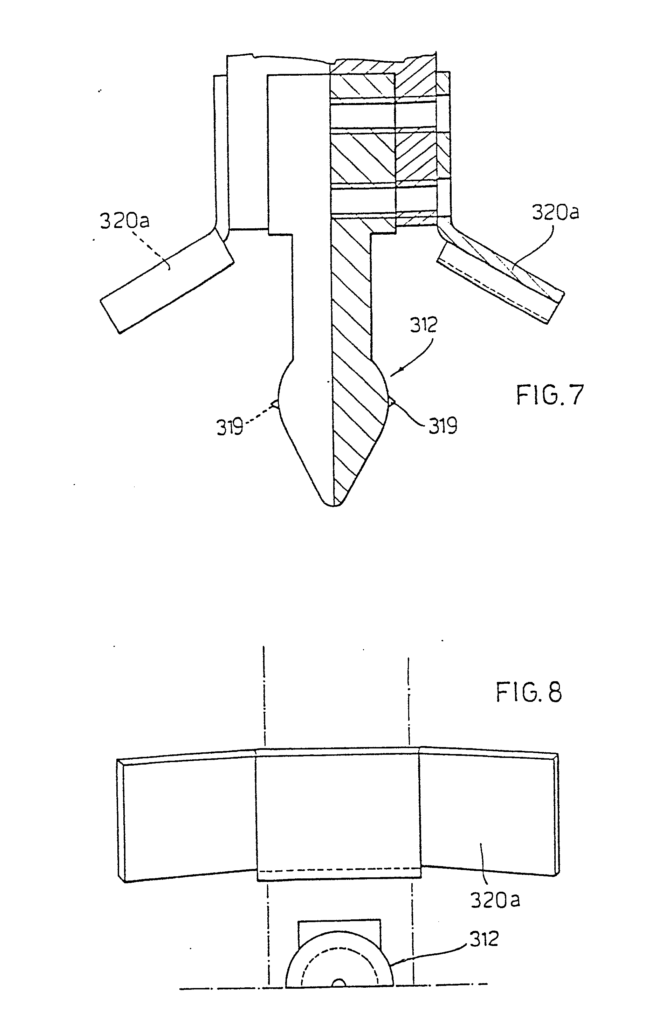

A reel gripping member 300 having a longitudinal axis 'a', comprises a plurality of jaws 312, generally two or three. The jaws are shiftable between a closed or reel disengagement position, in which they are against one another, and an open position (not shown) in which they engage the inner wall of a reel core. Each jaw comprises a tang portion 314, which can be secured by screws engaging into threaded holes 315 to an end element of a pantograph system, partly shown in Fig. 7, and not described as 'per sè' known for the operation of pliers and jaws. The jaw also comprises a stem 316 and a half-bulb engagement portion 318 with outer surface relieved in respect to the stem and of a rounded tapered shape. Teeth 319, generally one for each jaw, outwardly extend from the bulb shape.

A half-circle pan or plate 320 is secured on the stem of each jaw, with the edge relieved towards the jaw gripping end; the plate 320 serves as a stop to the jaw slipping into the reel and contributes to retain the reel on the jaw in a correct position; the distance 'h' between the plate and the end of the engagement portion is generally substantially less than the height of a reel, so that it is possible to engage reels still slipped on a rod and kept lifted thereon.

According to the modified embodiment of Fig. 7, the profile of the stem portion and bulb portion 316 and 318 remains identical, while the plate 320 is replaced for each jaw by an inclined bent sheet portion 320a (Fig. 8) also serving as an abutment or stop for the reel. It is geneally deemed that a member as shown in Figs. 5 and 6 is more suitable for conical reels, while a member as shown in Fig. 7 and 8 is more suitable for cylindrical reels.

By driving devices (not shown) the gripping member is lowered into the hole of a reel core until the reel comes in touch with the abutment; the jaws are then widened till they firmly engage the inner wall of the core, such an engagement preventing the reels from oscillating, oscillations which could cause jamming of the automatic process for reel handling.

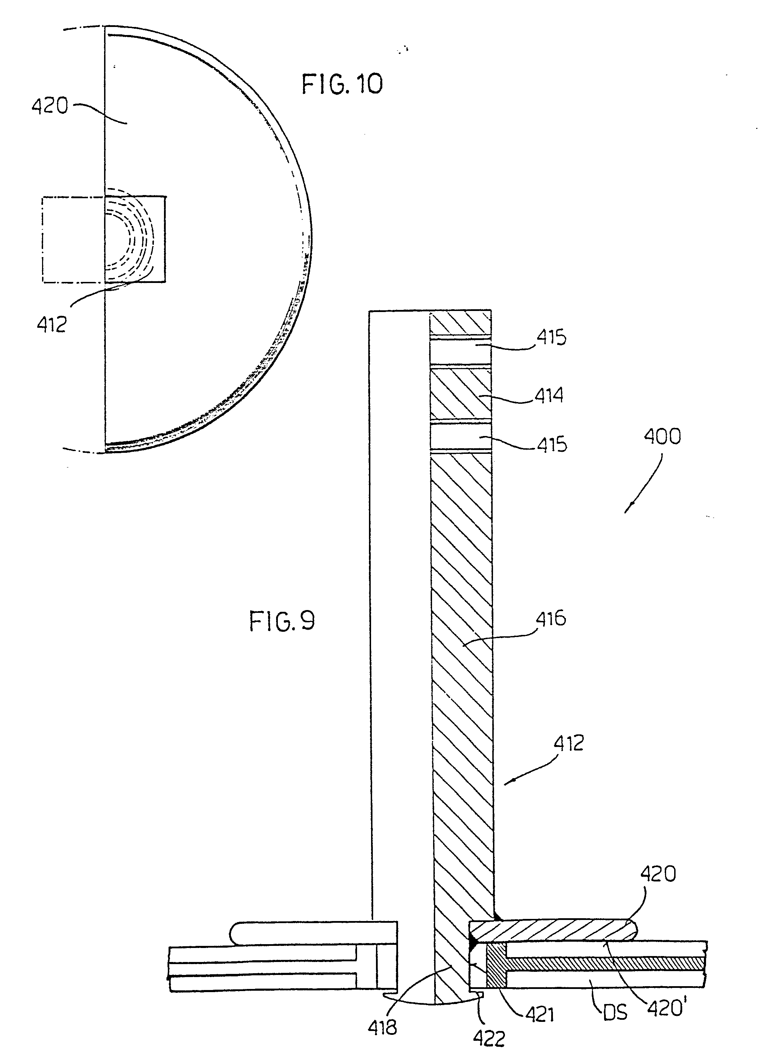

A gripping member 400 for spacing discs DS (one of which, only by way of illustration, is partly shown in Fig. 9) comprises a plurality of jaws 412, generally in number of two. Each jaw comprises a tang portion 414, a stem portion 416 and a gripping head 418. The tang portion is intended for connection, by screws engaging in threaded holes 415, to an end element of a pantograph system (not shown, because known in the use as control for gripping members), system which controls the opening and closing of the jaws. The gripping head 418 comprises a stop ridge 420, generally but not necessarily in the form of circular crown portion and generally including a pan or plate welded to the member and having an abutment surface 420', with a larger diameter than that of the hole of disc DS; the gripping head also comprises a recessed seat 421, generally of circular surface, and a retaining ridge or end tooth 422 radially extended, which is also generally but not necessarily in the form of a circle arc, as seen in plan view. The diameter of the end tooth is at least slightly minor than that of the disc hole. The lower surface of head 418 is preferably convex or tapered to favour the centering of a disc to be picked up.

In the preferred embodiment, each jaw has the ridge or plate of a semicircular shape, and also the seat and ridge 422 are of semicircular shape, so that each of these elements will form a complete circle when the jaws are drawn close to each other; other shapes in plan view are however possible, both for the stop ridge and for the tooth and the seat.

The two jaws preferably join each other along an axial plane of the member.

In operation, the gripping member is lowered on a pile of discs and by the gripping head 418 is inserted into the hole of an upper disc, for a distance determined by the presence of plate 420; the jaws open and the head engages a disc DS; the disc so engaged is lifted while it is kept in the seat between ridge 420 and tooth 422, and can be easily moved, without oscillations.

Device 76 operates preferably simultaneously with pliers 114 and 116. While pliers 114 (arrow E in Fig. 1) draw a reel from the apparatus 72, pliers 116 place a spacing disc on a rod AR during the filling up of the dyeing basket 130 (position shown by full line in Fig. 1); then the crosspiece moves to bring pliers 114 (arrow F) vertically above a rod AR to unload the reel and pliers 116 vertically above a store or magazine rod AD supporting the separating discs DS for the reels (dashed position). It is possible to pre-set pliers 114 and 116 at a fixed distance from each other and the distances between the devices 72, 130 and AD set accordingly, or it is possible to pre-set a variation in distance between pliers 114 and 116. For the lifting of the piles of discs DS, an arm 142 is provided, which can be lifted in any known manner.

Should the discs or plates carried on a single magazine rod be insufficient, a magazine rod supplying apparatus 510 is provided, shown in Figs. 14–16.

The magazine rods or disc-carrying rods are indicated at 511. Each magazine rod has a foot 511' formed by an elongated plate.

The supply apparatus 510 for magazine rods 511 comprises on a fixed structure 512 a continuous conveyor, such as a plate chain means 514. Preferably the chain means 514 comprises two chains 514a and 514b movable as a single body. A movement direction is shown by the arrow of Fig. 14. The chain means rotates around pairs of toothed wheels 516 of which, obviously, a pair, for instance the one shown in the figures, will be the drive pair for the chains.

On longitudinally spaced apart plates of the chain conveyor means (for example, as in the figure, on one plate out of three),a pocket 518 is mounted, formed by a flattened sleeve, having a through opening of such dimensions to receive foot 511' of a rod 511, and having a U-shaped slot at the top to receive rod 511, allowing the sliding thereof to a central position on the conveyor. Both the sleeve opening and the slot preferably have an axis transverse to the chain forward movement. The dimension ratio of the rod foot and the sleeve 518 is such that the foot projects on one end and the other of the sleeve, that is on one side and the other of the chain means, so as to bear on side guide rails 520 made integral with the fixed framework 512 and if it is the case coated with a strip 522 of polytetrafluoroethylene or other antifriction material. Of course, the shape of the engagement seats or pockets for the rod foot could be other than that shown.

The advancement of the chain conveyor means 514 is stepwise, generally each step being equal to the center distance between one pocket and the next one.

The apparatus may also comprise an ejecting means 524, formed by a cylinder-piston unit 525 moving transversely to the chains; the mobile element of the cylinder-piston unit carries a pushing or thrusting head 526, preferably with a seat 526' for partially enclosing the contour of rod 511.

Initially, the apparatus 510 is loaded with a plurality of disc carrying rods, for instance filled up with discs. The discs of a first rod 511, at a predetermined position with regards to a dyeing basket whose rods (orthogonal to the drawing sheet in fig. 15) are filled with reels R, are first gripped one by one and positioned on the reels. When the rod is depleted, the chain means moves forward by one step and the discs are drawn one by one from a next rod 511. The unloaded rods 511 travel up to ejecting means 524 which removes them from the pockets. The apparatus may also be used for reel unloading; in such a case it is loaded with empty rods which are then filled and ejected.

In conventional systems the reels piled up on each rod are clamped by clamping devices known in the art.

Without going into unnecessary operating details, a known reel clamping device comprises a block, provided with a through opening of sufficient dimensions for the rod to go through, and an operating lever extended from the block, as well as a spring means for pressing a retaining collar against the reels. With the clamping device arranged with vertical axis, as generally used, a lifted position of the lever corresponds to a free condition of the device, whereas a lowered position of the lever, as obtained by gravity in the absence of external forces, corresponds to a clamped position of the device.

In Figs. 11, 12 and 13, reference 602 indicates a conventional clamping device, comprising a block 603, a lever 604, a cone collar 605 pushed by a spring 606 around a cylindrical extension 607 of the body. The lever is shown at a lowered clamping condition. AR indicates a reel carrying rod of a dyeing basket, R a reel slipped onto a rod at a top end position, DS a spacing plate or disc for reels, of common use.

The applying-removing apparatus 610 for devices 602 substantially comprises a fixed framework 612 having a guide or pair of guides 614. A carriage 616 is shiftable on the guide 614 under control of a cylinder-piston unit or other operating means, not shown. The carriage 616 has a cylinder-piston unit 618 or other operating means, whose mobile element 620 is vertically displaceable and also carries vertical guides 622.

A frame 626 to the end of the stem or movable element 620 is connected to the end of the stem or movable element 620 said frame is guided for vertical movement on guides 622.

Frame 626 has a centering member 628 secured thereto, generally formed by a cylinder with opening for positioning with reduced clearance around the end of rod AR.

Said frame 626 also has two opposite walls 627 terminating at the bottom with guide walls 628. Each wall 627 has an operating means 630, for instance a cylinder-piston unit, with the movable element integral with a jaw, the two jaws being shown at 632, 633; jaws 632 and 633 can slide near and away from each other.

Jaw 633 carries, secured to one side thereof, a cam or tab 634, having an inclined top surface 635, which is lower at the farmost end of the jaw and higher at the nearer end. Each of the jaws have a gripping surface 632', 633' for enclosing part of the circumference of the device 602.

For the application of each device 602, when slider 616 is shifted, for instance to the left on guide 614, jaws 632 and 633 draw a device 602 presented at the top by a magazine column (not shown) of devices 602 piled up on a rod.

The position of cam 634 with at lever 604 in respect to block 603 of device 602, so that the cam engages the lever, which is thereby retained at a lifted condition and the device is in unclamped free condition.

Slider 616 moves along guide 614 till it settles (suitable position abutments of a per se known type may be provided) vertically above a rod AR filled with reels R. The cylinder-piston unit 618 lowers the frame 626 so as to slip the centering member 628 around the end of rod AR; possible position adjustments are allowed by joint 624. Being the centering member 628 fixed to the frame 626, the position of the jaws and cam in relation to the device is then automatically established. Jaws 632 and 633 are then spread out to allow the lowering by gravity of lever 604 and then of block 603 of device 602. Apparatus 610 is thus lifted.

Removal of device 602 is carried out as follows: the cylinder piston 618 lowers frame 626 on rod AR; jaws 632 and 633 move towards each other so that lever 604 is lifted on profile 635 of cam 634, thereby releasing the device 602 which, gripped by the jaws, is then lifted away.

A support is provided for dyeing basket 130 comprising a slide 144 (Fig. 1) and an indexing fixture or platform 146 angularly stepwise movable so as to present in turn at loading position each of the reel carrying rods AR. The slide and the indexing fixture will not be herein described in detail as they may be of any known type. To keep each AR rod in a straight up position at the time of reel loading, a centering apparatus 78 is provided, which will be discussed in the following in connection with reel unloading.

In the connection with the unloading of a basket after dyeing, use can be made of the same loading unit of Fig. 1; however it is preferable to have a separate basket unloading unit 70', schematically shown in Fig. 2. Unit 70' includes, besides a reel centering-lifting apparatus 78' similar to 78, a transfer apparatus 76' substantially identical to 76, and therefore not further described, and a wheel apparatus 72', similar to 72 and not further described.

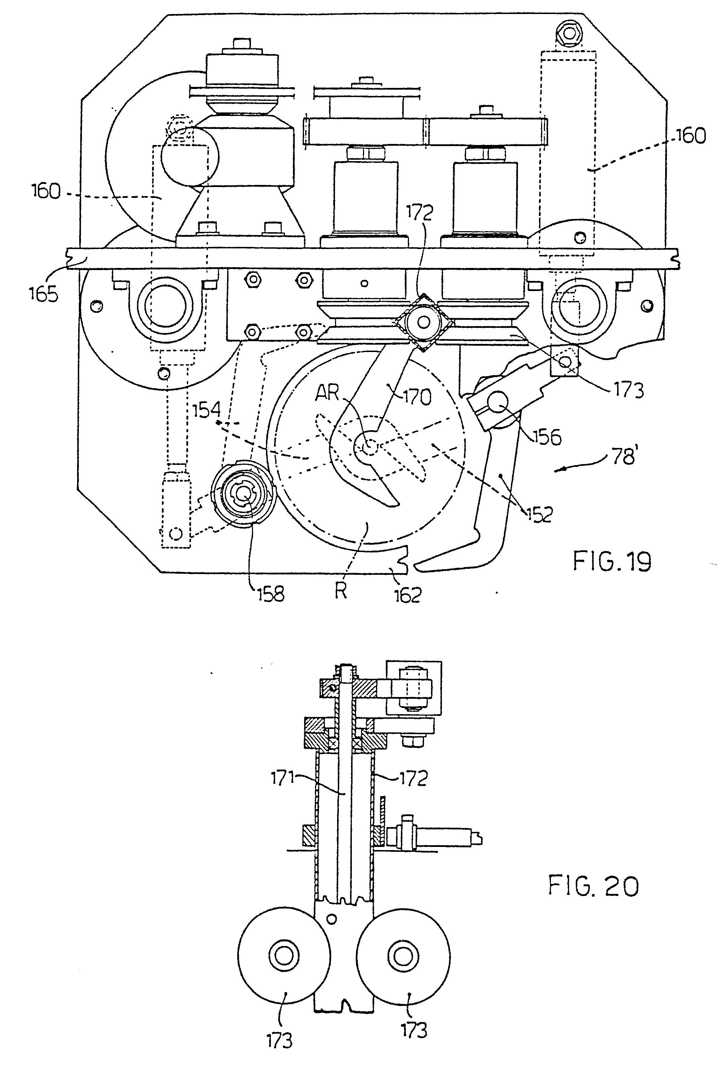

The centering-lifting device 78 or 78' will now be described, with reference to Figs.17 to 20. It comprises two centering arms 152 and 154 each revolving around its own vertical pin 156 and 158. The arms have a notch equal to a semi-circumference of rod AR and are shown in Fig. 19 at widened position by a thicker line and at approached position by a thinner line, around a rod AR. The opening and closing of the arms is determined by a cylinder-piston unit, such as 160. The centering arms and their opening pistons are carried on a plate 162 vertically shiftable by cylinder-piston unit 164 placed on a fixed plate 165. The reel lifting means comprise an arm 170 having a notch or cavity of circumference larger than that of rod AR. Arm 170 revolves around a vertical axis and is liftable as desired; in the example shown it is carried on a stem 171, in turn carried in a revolving way within a tube of square cross-section 172. Rotatably driven rollers 173 provide for the lifting and lowering of tube 172 and stem 171; the latter can be rotated as desired around its own axis within the tube, thus rotating arm 170.

Said apparatus 78 is identical to the 78' except that the reel lifting device may be missing.

The process and operation of the system will now be described.

Reels from a spooler or from packaging packs are treated.

The reels are presented one by one, skirted, supported on a reel carrying device of apparatus 72.

Pliers 114 of the device 76 draw reel R; at the same time pliers 116 drops on rod AR a disc previously drawn from the disc magazine.

Pliers 114 of the device 76 then moves towards the right (dashed position of Fig. 1) and in this position pliers 114 lets the reel R drop on rod AR ready for loading while pliers 116 lift a new disc DS.

The cycle continues till the complete filling of a rod AR of the basket; a clamping device 602 is secured to the rod by apparatus 610, whereupon a "per-se" known automatic control provides for the rotation of the basket-carrying indexing fixture 146 so to present the next rod for loading.

During loading, the centering apparatus closes the arms accurately positioning the rod end; after the loading of each reel, arms 152 and 154 open to allow it to fall along the rod.

When basket 130 is completely filled up with reels, it is introduced into an empty dyeing cabinet.

When unloading, the reels are lifted along each rod AR by the lifting device and are drawn from the rods AR by the apparatus 76' and slipped on the gripping members of wheel or apparatus 72'. The discs are removed and piled on the rod AD by the disc pliers.

From wheel 72' the reels can be positioned on a centrifugal drum.

OFFICINE MINNETTI DI FEDERICO MINNETTI & C. S.A.S.

IT - 58018 PIEVE A NIEVOLE (Pistoia)


C L A I M S


1.     A process for handling yarn reels (R) particularly in connection with loading thereof into a dyeing cabinet, comprising transferring reels (R) to a dyeing basket (130) and slipping thereof on basket rods (AR), placing separating discs (DS) between each reel and the next, characterized in that gripping of each reel for the transfer takes place engaging the inside of the reel, and in that the drawing of a reel for transfer to the basket takes place substantially at the same time to the placing of a separating disc (DS) on a reel (R) previously positioned on a rod (AR) and the placing of the reel on the rod takes place at the same time of the lifiing of a separating disc to be subsequently placed on said reel, and furthermore in that it includes angular rotation of the basket (130) by predetermined angles when a certain number of reels on a loading rod is reached.

2.     A process according to claim 1 comprising the subsequent step of gripping each basket rod to keep it still and

0209652

- 22 -

centered during loading or unloading of the reels.

3.     A system for handling articles particularly yarn reels (R) and particularly in relation to a dyeing treatment, characterized in that it includes a transfer apparatus (76) to transfer yarn reels.

4.     A system according to claim 3, characterized in that said transfer apparatus (76) includes at least a pliers member (114, 300) made of spreadable rod of a size suitable to be introduced between a rod of the dyeing basket and a reel thereon.

5.     A system according to claim 3, characterized in that said transfer apparatus (76) includes a movable crosspiece (110) carrying two pliers members (114, 116) spaced apart and shiftable transversely to the crosspiece movement.

6.     A system according to claim 3, characterized in that said transfer apparatus (76) includes a gripping member (114, 300) for reels having at least two jaws (312) movable between a closed position, where they do not engage the inner wall of a reel core, and an open position where they engage it, each jaw having a tang attachment means and an operating means, and a gripping portion (318); and also a stop or abutment means (320, 320a) extended from said jaw, said gripping portion having an enlarged shape on each jaw so as to form a total bulb shape at closed jaws.

7.      A system according to claim 6, characterized in that said stop means is a semicircular plate (320) radially extended and arranged between the gripping portion (318) and the tang attachment means (314).

8.      A system according to claim 3, characterized in that said transfer apparatus comprises a gripping member (116, 400) for reel separating discs, said discs (DS) having a through hole; characterized in that it comprises jaws (412) movable between an open condition where they engage the disc hole and a closed condition where they do not engage the disc; said member comprising a gripping portion on the jaws, which in turn includes an extended ridge (420) forming a stop or an abutment, a circumferential groove (421) and a tooth (422) spaced apart from the ridge.

9.      A system according to claim 3, characterized in that it includes an apparatus for applying and removing clamping devices for reels on rods, said devices (602) including a block (603) that can be slipped on the rod and which is controlled by a lever (604) between a clamped and a released condition, said apparatus comprising:

- gripping means (632, 633) to grip the clamping device;
- lifting means (634) for the device lever, formed by a cam movable between a position for the lowering of the lever by gravity and a position in which it lifts the lever to a released condition of the device.

10.     A system according to claim 9, wherein said gripping means comprise a pair of jaws (632, 633) movable between a position where they do not engage the device and a position where they engage it; the cam (634) being integral with one said jaw; said apparatus also includes a support frame (626) for said gripping means and cam, said frame being vertically movable on a slide (616), said slide being horizontally movable.

11.     A system according to claim 3, characterized in that it includes a supply apparatus (510) for disc carrying rods (511), said rods having a foot (511') for engagement with said device, said apparatus comprising:

- a continuous conveyor means (514) having engagement elements (518) for the rod feet, said engagement element being longitudinally spaced apart on said means;
- means to determine a stepwise forward movement of the conveyor.

12.     A system according to claim 11, further comprising a pusher means (525) for ejecting said rods from the engagement elements.

13.     A system according to claim 11, wherein each said engagement element (518) comprises a sleeve dimensioned to receive the rod foot and a top U-shaped slot to receive the rod, said apparatus comprising guide rails (520) fixed to the conveyor sides, said foot being of such extension as to project beyond said engagement element and said continuous conveyor to slide on said rails.

14.     A system according to claim 3, characterized in that it includes a centering device (78, 78') for the dyeing basket rods (AR), said device comprising, on a fixed structure, jaws (152, 154) or arms rotating around vertical pins (156, 158) for arrangement around the rod (AR).

15.     A system according to claim 3, characterized in that it includes a support platform (146) for a dyeing basket, said platform being revolving and linearly shiftable.

16.     A system according to claim 3, characterized in that it includes a lifting device to lift the reels slipped on a vertical rod of a dyeing basket, said device comprising an arm (170) movable along a vertical axis.

FIG.1

FIG. 2

70'

76'

R

AR

R

DS

72'

130

78'

AD

FIG.3

FIG. 4

132  124  131  132  112  131  110  118  114  120  116  136

FIG. 5

314
315
a
315
300
320
316
312
319
318
h

FIG. 6

320

320a

320a

312

319 319

FIG.7

FIG.8

320a

312

FIG.10

420

412

FIG.9

400

415
414
415

416

412

420

418  422  421  DS  420'

FIG.11

FIG.12

FIG.13

FIG. 14

FIG. 16

FIG.15

DS    DS    R    R    510    525    524    526 516

518 511'

DS    514    511 511'    526'    526

c209652

11/14

FIG. 17

165

164

172

162

158

154

156

152

170

FIG. 18

FIG.19

FIG.20

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | DE-A-2 300 838 (K. BECKER) <br> * Whole document * <br><br> --- | 1,3 | D 06 B 5/16 <br> B 65 H 67/06 <br> D 01 H 9/00 |
| A,D | US-A-3 358 940 (W.L. BECKWITH) <br><br> --- | | |
| A,D | FR-A-2 228 018 (OFFICINE SAVIO) <br><br> ----- | | |

TECHNICAL FIELDS SEARCHED (Int Cl.4)

D 06 B
B 65 H
D 01 H

The present search report has been drawn up for all claims

| Place of search <br> THE HAGUE | Date of completion of the search <br> 10-11-1986 | Examiner <br> HOEFER W.D. |
|---|---|---|